# EUROPÄISCHE PATENTSCHRIFT

(11) **EP 2 094 547 B1**
(45) Veröffentlichungstag und Bekanntmachung des Hinweises auf die Patenterteilung: **22.05.2013**
(21) Anmeldenummer: 07856264.2
(22) Anmeldetag: 26.11.2007
(51) Int. Cl.: B60T 13/26, B60T 17/18

(54) **FESTSTELLBREMSVORRICHTUNG MIT DRUCKLUFTVERSORGUNGSLEITUNGEN FÜR EINE FESTSTELLBREMSE**
PARKING BRAKE DEVICE COMPRISING COMPRESSED AIR SUPPLY LINES FOR A PARKING BRAKE
DISPOSITIF DE FREIN DE STATIONNEMENT ÉQUIPÉ DE CONDUITS D'ALIMENTATION EN AIR COMPRIMÉ

(30) Priorität: 24.11.2006 DE 102006055569
(43) Veröffentlichungstag der Anmeldung: 02.09.2009
(73) Patentinhaber: Knorr-Bremse Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2007/010248
(87) Internationale Veröffentlichungsnummer: WO 2008/061798

(56) Entgegenhaltungen:
- EP-A- 0 171 281
- DE-U1- 20 122 549

## Beschreibung

Die Erfindung betrifft eine Feststellbremsvorrichtung für ein pneumatisches Bremssystem eines Nutzfahrzeugs mit einer ersten Druckmittelzuführleitung, über die Druckmittel zumindest einer Feststellbremse über einen ersten Anschluss eines Wechselventils zuführbar ist, und einer zweiten Druckmittelzuführleitung, über die Druckmittel der zumindest einen Feststellbremse über einen zweiten Anschluss des Wechselventils zuführbar ist. Dokument DE 20122549 U1 offenbart eine Feststellbremsvorrichtung deiser gattung.

In modernen Bremssystemen werden Feststellbremsvorrichtungen eingesetzt, die zur Betätigung einer Feststellbeziehungsweise Parkbremse eines Kraftfahrzeugs dienen. So werden insbesondere zur Steuerung von Drücken in Federspeicherbremszylindern der Feststellbremse so genannte ECPB-Module (ECPB = Electronic Controlled Parking Brake) verwendet. Diese ECPB-Module umfassen üblicherweise eine Steuereinrichtung, über die eine Feststellbremsbetätigungseinrichtung und eine Feststellbremse-Notlöseeinrichtung ansteuerbar sind. Um die Feststellbremse festzustellen öder zu lösen steuert die Steuereinrichtung die Feststellbremsbetätigungseinrichtung an, die entsprechend der Ansteuerung beispielsweise eine Entlüftung der Federspeicherbremszylinder zur Feststellung der Feststellbremse und umgekehrt eine Belüftung der Federspeicherbremszylinder zum Lösen der Feststellbremse vornimmt. Die durch die Feststellbremsbetätigungseinrichtung vorgenommene Belüftung erfolgt üblicherweise durch eine Druckmittelzuführleitung, die beispielsweise mit einer Luftaufbereitungsanlage des Nutzfahrzeugs gekoppelt sein kann. Bei einer derartigen Feststellbremsbetätigungseinrichtung kann der Fall auftreten, dass aufgrund einer Leckage in der Feststellbremsanlage, beispielsweise in Leitungen zu den Federspeicherbremszylindern der Feststellbremse, die Belüftung der Federspeicherbremszylinder und damit das Lösen der Feststellbremse nicht mehr vorgenommen werden kann. Die Feststellbremsbetätigungsvorrichtung ist somit nicht mehr betriebsfähig und fällt aus. Aus diesem Grund umfasst das ECPB-Modul die Feststellbremse-Notlöseeinrichtung, die bei Auftreten der Leckage von der Steuereinrichtung angesteuert wird, um eine Feststellbremse-Notlösefunktion durchzuführen, indem über eine weitere Druckmittelzuführleitung eine Belüftung der Federspeicherbremszylinder vorgenommen wird, um die Feststellbremse zu lösen. Beide Druckmittelzuführleitungen werden üblicherweise entsprechend der Anzahl der Feststellbremsen verzweigt und jeweils an einen ersten und zweiten Anschluss eines Wechselventils für eine bestimmte, einem Rad des Nutzfahrzeugs zugeordnete Feststellbremse gekoppelt. Dadurch ergibt sich eine große Anzahl von Wechselventilen. Dies erfordert einen erheblichen Montageaufwand für Feststellbremsvorrichtungen mit derartigen Feststellbremse-Notlösesystemen. Darüber hinaus werden die Wechselventile radweise jeweils an dem Federspeicherbremszylinder der entsprechenden Feststellbremse montiert. Zum einen wird die Montage durch den geringen Bauraum stark erschwert. Zum anderen besteht ferner die Gefahr des Steinschlags, durch den die radweise angebrachten Wechselventile beschädigt werden können.

Es ist daher die Aufgabe der vorliegenden Erfindung, die gattungsgemäßen Feststellbremsvorrichtungen derart weiterzubilden, dass eine kompaktere Bauweise der Feststellbremsvorrichtung ermöglicht wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die erfindungsgemäße Feststellbremsvorrichtung baut auf dem gattungsgemäßen Stand der Technik dadurch auf, dass über das Wechselventil zumindest zwei Feststellbremsen Druckmittel zuführbar ist. Da durch diese konstruktive Maßnahme lediglich ein Wechselventil für zwei Feststellbremsen erforderlich ist, wird insgesamt eine kompaktere Bauweise der Feststellbremsvorrichtung ermöglicht. Ebenso entfällt auch eine zusätzliche Verrohrung, die im Falle der radweisen Montage des Wechselventils notwendig war. Weiterhin kann das Wechselventil so an dem Nutzfahrzeug platziert werden, dass die Steinschlaggefahr zumindest verringert wird.

Die erfindungsgemäße Feststellbremsvorrichtung ist derart aus gebildet , dass die zwei Feststellbremsen an einer Achse des Kraftfahrzeugs vorgesehen sind. Die achsweise Zuordnung der Wechselventile für die entsprechenden Feststellbremsen verringert die Anzahl der Wechselventile im Vergleich zum Stand der Technik. Ebenso sind aber auch Zuordnungen eines Wechselventils für Feststellbremsen von mehreren Achsen denkbar.

Darüber hinaus ist die erfindungsgemäße Feststellbremsvorrichtung so ausgebildet, dass die erste und zweite Druckmittelzuführleitung jeweils mit einem ersten und zweiten Anschluss eines weiteren Wechselventils gekoppelt sind, über das zumindest zwei Feststellbremsen einer weiteren Achse Druckmittel zuführbar ist. Dies lässt sich beispielsweise durch kaskadierbare Ausgänge an der ersten und zweiten Druckmittelzuführleitung bewerkstelligen.

Ferner kann die erfindungsgemäße Feststellbremsvorrichtung derart umgesetzt werden, dass das Wechselventil und/oder das weitere Wechselventil sowie ein eine Notlösefunktion zur Verfügung stellendes 3/2-Wegeventil zu einer Baugruppe zusammengefasst sind. Diese Baugruppe ist universell an dem Nutzfahrzeug an geeigneter Stelle montierbar, um eine Verrohrung für erforderliche Druckmittelleitungen der Feststellbremsvorrichtung möglichst gering zu halten, beispielsweise an einem Rahmen des Nutzfahrzeugs.

Weiterhin kann die erfindungsgemäße Feststellbremsvorrichtung derart verwirklicht werden, dass das Wechselventil und/oder das weitere Wechselventil in einem ECPB-Modul aufgenommen werden. Insbesondere wenn die Wechselventile entfernt von den Radzylindern in dem ECPB-Modul integriert sind, entfällt die Steinschlaggefahr.

Bevorzugte Ausführungsformen der Erfindung werden nachfolgend anhand der Figuren beispielhaft erläutert.

Es zeigen:
- Figur 1: eine vereinfachte Darstellung einer Feststellbremsvorrichtung in einem nur teilweise dargestellten Bremssystem zur Erläuterung der Erfindung;
- Figur 2: eine detaillierte Darstellung der erfindungsgemäßen Feststellbremsvorrichtung gemäß Figur 1;
- Figur 3: einen Ausschnitt der erfindungsgemäßen Feststellbremsvorrichtung gemäß einem ersten Ausführungsbeispiel der Erfindung;
- Figur 4: eine Darstellung der erfindungsgemäßen Feststellbremsvorrichtung gemäß dem ersten Ausführungsbeispiel der Erfindung in einem nur teilweise dargestellten Bremssystem; und
- Figur 5: eine Darstellung der erfindungsgemäßen Feststellbremsvorrichtung gemäß einem zweiten Ausführungsbeispiel der Erfindung.

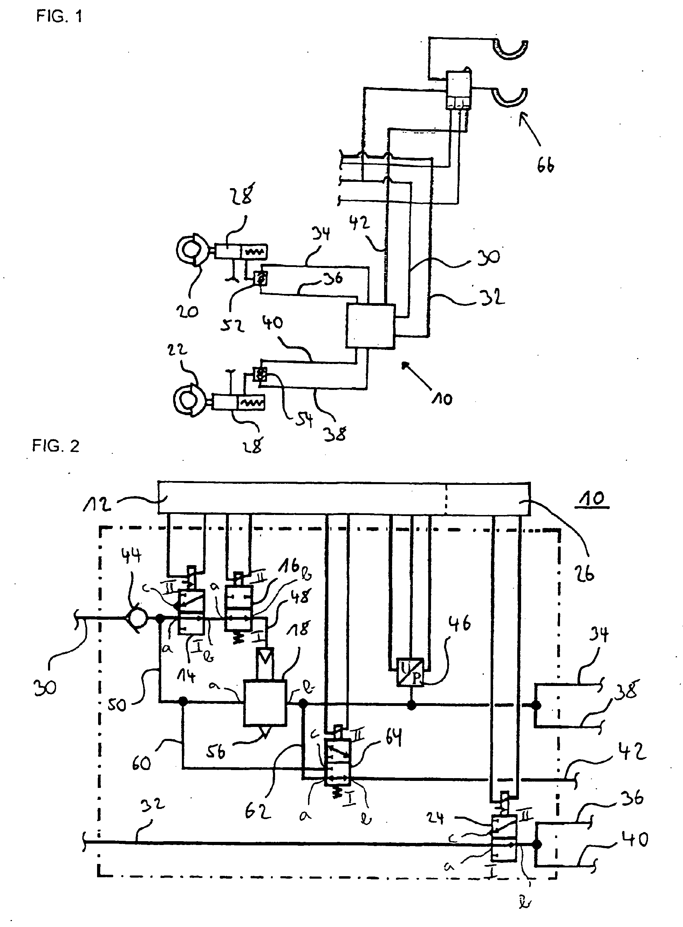

Figur 1 zeigt eine vereinfachte Darstellung der Feststellbremsvorrichtung 10 in einem nur teilweise dargestellten Bremssystem eines Kraftfahrzeugs. Weiterhin ist die Feststellbremsvorrichtung 10 in Figur 2 in einer detaillierten Darstellung gezeigt. Die Feststellbremsvorrichtung 10 umfasst unter anderem eine Steuereinrichtung 12 zur Ansteuerung einer Feststellbremsbetätigungseinrichtung 14, 16 und 18, die zum Lösen und Feststellen einer linken und rechten Feststellbremse 20, 22 des Kraftfahrzeugs dient und worauf nachstehend genauer eingegangen wird. Darüber hinaus umfasst die Feststellbremsvorrichtung 10 eine Feststellbremse-Notlösesteuereinrichtung 26 zur Ansteuerung einer Feststellbremse-Notlöseeinrichtung 24, die bei Ausfall der Steuereinrichtung 12 und/oder der Feststellbremsbetätigungseinrichtung 14, 16 und 18 zum Lösen der linken und rechten Feststellbremse 20, 22 dient. Beide Steuereinrichtungen 12 und 26 sind voneinander weitgehend unabhängig, insbesondere was die Funktionstüchtigkeit der einen beim Ausfall der anderen betrifft, und umfassen jeweils dem Fachmann bekannte Komponenten wie beispielsweise eine ECU oder einen Controller mit einem Prozessor, einen Speicher, etc. Darüber hinaus ist die Feststellbremse-Notlösesteuereinrichtung 26 mit der Steuereinrichtung 12 gekoppelt, um Rückschlüsse über den Zustand der Steuereinrichtung 12 ziehen zu können und damit einen möglichen Ausfall der Steuereinrichtung 12 ermitteln zu können. Ebenso können die Steuereinrichtungen 12, 26 gegenseitige Überwachungs- und Back-up-Funktionen wahrnehmen. Es ist auch möglich die Feststellbremse-Notlösesteuereinrichtung in eine andere Steuereinheit des Fahrzeugs zu integrieren, z. B. eine Steuereinheit eines Elektronischen Bremssystems (EBS).

Die Feststellbremsbetätigungseinrichtung 14, 16, 18 wird durch ein bistabiles 3/2-Wegeventil 14, ein 2/2-Wegeventil 16 und ein Relaisventil 18 gebildet, wobei die Steuereinrichtung 12 zur Ansteuerung mit dem 3/2-Wegeventil 14 und dem 2/2-Wegeventil 16 über elektrische Leitungen gekoppelt ist. Das bistabile 3/2-Wegeventil 14 ist mit einem ersten Anschluss a über ein Rückschlagventil 44 mit einer ersten Druckmittelzuführleitung 30 des Bremssystems gekoppelt. Die erste Druckmittelzuführleitung 30 kann beispielsweise mit einer nicht dargestellten Druckluftaufbereitungsanlage (EAC-Modul) zur Druckluftbeschaffung gekoppelt sein. Im dargestellten Fall öffnet das Rückschlagventil 44 bei einer Druckmittelströmung in Richtung des bistabilen 3/2-Wegeventils 14 und schließt bei entgegengesetzter Strömungsrichtung des Druckmittels. Weiterhin ist das bistabile 3/2-Wegeventil 14 mit einem zweiten Anschluss b mit einem ersten Anschluss a eines 2/2-Wegeventils 16 gekoppelt. In der in Figur 2 dargestellten Schaltstellung I des bistabilen 3/2-Wegeventil 14 sind der erste und zweite Anschluss a, b des bistabilen 3/2-Wegeventil 14 miteinander verbunden. In einer Schaltstellung II des bistabilen 3/2-Wegeventils 14 ist der erste Anschluss a geschlossen, wobei der zweite Anschluss b des bistabilen 3/2-Wegeventils 14 über einen Ausgang (dritter Anschluss c) mit der Atmosphäre verbunden ist. Das 2/2-Wegeventil 16 verbindet in einer dargestellten Schaltstellung I dessen ersten Anschluss a mit einem zweiten Anschluss b. Hingegen sind der erste und zweite Anschluss a, b des 2/2-Wegeventils 16 in dessen Schaltstellung II geschlossen. Der zweite Anschluss des 2/2-Wegeventils 16 ist mit einem Ansteuereingang 48 eines Relaisventils 18 gekoppelt. Das bistabile 3/2-Wegeventil 14 ist durch die Steuereinrichtung 12 derart ansteuerbar, dass es bei Vorliegen einer bestimmten Polung der elektrischen Leitungen die Schaltstellung I (wie gezeigt) einnimmt. Hingegen ist das bistabile 3/2-Wegeventil 14 weiterhin so ansteuerbar, dass es die Schaltstellung II einnimmt, wenn eine Umpolung der elektrischen Leitungen durch die Steuereinrichtung 12 vorgenommen wird. Das 2/2-Wegeventil 16 nimmt in einem unbestromten Zustand die Schaltstellung I und umgekehrt in einem bestromten Zustand die Schaltstellung II ein. Zwischen dem Rückschlagventil 44 und dem bistabilen 3/2-Wegeventil 14 ist an einer Verzweigungsstelle eine Bremsleitung 50 mit der Druckmittelzuführleitung 30 gekoppelt. Die Bremsleitung 50 ist mit einem Anschuss a des Relaisventils 18 gekoppelt. Die Bremsleitung 50 verläuft von einem Anschluss b des Relaisventils 18 weiter. Darüber hinaus ist an dem Relaisventil 18 ein mit der Atmosphäre verbundener Relaisventilausgang 56 vorgesehen. In Abhängigkeit von dem Druck des Druckmittels in dem Ansteuereingang 48 stellt das Relaisventil 18 eine Verbindung zwischen dessen Anschlüssen a und b oder dem Anschluss b und dem Relaisventilausgang 56 her. Hierauf wird weiter untenstehend genauer eingegangen. Nach dem Anschluss b des Relaisventils 18 verzweigt sich die Bremsleitung 50 schließlich an einer Verzweigungsstelle in Bremsleitungen 34 und 38. Die Bremsleitungen 34 und 38 sind jeweils über ein Wechselventil 52 und 54 mit einem linken und rechten Federspeicherbremszylinder 28 der linken und rechten Feststellbremse 20, 22 gekoppelt. Darüber hinaus ist ein Drucksensor 46 zwischen dem Relaisventil 18 und der Verzweigungsstelle zu den Bremsleitungen 34, 38 zur Druckerfassung vorgesehen. Alternativ kann der Drucksensor 46 auch in einer oder beiden Bremsleitungen zwischen dem entsprechenden Wechselventil 52, 54 und Federspeicherbremszylinder 28 der jeweiligen Feststellbremse 20, 22 vorgesehen sein.

Die Feststellbremse-Notlöseeinrichtung 24, die durch ein bistabiles 3/2-Wegeventil 24 gebildet wird, ist in einer weiteren beziehungsweise zweiten Druckmittelzuführleitung 32 vorgesehen und wird, wie vorstehend erwähnt, durch die Feststellbremse-Notlösesteuereinrichtung 26 über elektrische Leitungen angesteuert. Die zweite Druckmittelzuführleitung 32 kann dabei ebenso wie die erste Druckmittelzuführleitung 30 mit einer Druckluftaufbereitungsanlage gekoppelt sein. Insbesondere ist die zweite Druckmittelzuführleitung 32 mit einem ersten Anschluss a des bistabilen 3/2-Wegeventils 24 gekoppelt, der in der gezeigten Schaltstellung I mit einem zweiten Anschluss b des bistabilen 3/2-Wegeventils 24 gekoppelt ist. Hingegen ist in einer Schaltstellung II der erste Anschluss a geschlossen, wohingegen der zweite Anschluss b des bistabilen 3/2-Wegeventils 24 über einen Ausgang (dritter Anschluss c) mit Atmosphäre verbunden ist. Bei Vorliegen einer bestimmten Polung nimmt das bistabile 3/2-Wegeventil 24 die Schaltstellung I ein. Wird eine entgegengesetzte Polung auf das bistabile 3/2-Wegeventil 24 aufgebracht, so nimmt es die Schaltstellung II ein. Der zweite Anschluss b des bistabilen 3/2-Wegeventils 24 ist über eine Verzweigungsstelle mit Bremsleitungen 36 und 40 gekoppelt. Die Bremsleitungen 36 und 40 sind ebenso wie die Bremsleitungen 34 und 38 jeweils über die Wechselventile 52, 54 mit den Federspeicherbremszylindern 28 der linken und rechten Feststellbremse 20, 22 gekoppelt.

Darüber hinaus ist stromaufwärts des Relaisventils 18 eine Anhängerbremstestleitung 60 an einer Verzweigungsstelle mit der Bremsleitung 50 gekoppelt, wobei die Anhängerbremstestleitung 60 mit einem dritten Anschluss c eines 3/2-Wegeventils 64 gekoppelt ist. Weiterhin ist stromabwärts des Relaisventils 18 eine Anhängerbremstestleitung 62 an einer Verzweigungsstelle mit der Bremsleitung 50 gekoppelt, wobei die Anhängerbremstestleitung 62 mit einem ersten Anschluss a des 3/2-Wegeventils 64 gekoppelt ist. In einer Schaltstellung I des 3/2-Wegeventils 64 ist der erste Anschluss a mit einem zweiten Anschluss b verbunden, der über eine Anhängerbremstestleitung 42 mit einer in Figur 1 gezeigten Steuerventileinheit einer Anhängerbremse 66 gekoppelt ist. Hingegen ist der dritte Anschluss c in der Schaltstellung I des 3/2-Wegeventils 64 geschlossen. In einer Schaltstellung II ist der erste Anschluss a geschlossen, wohingegen die dritte und zweite Anschluss c, b des 3/2-Wegeventils 64 miteinander verbunden sind. Wie auch die vorstehend genannten Wegeventile 14 und 16 ist auch das 3/2-Wegeventil 64 mit der Steuereinrichtung 12 über elektrische Leitungen gekoppelt. Die Anhängerbremstestleitung 42 und das 3/2-Wegeventil 64 dienen insbesondere dazu, während eines Entlüftungsbetriebs der Feststellbremsen 20, 22 eine Bremswirkung der Anhängerbremse 66 mittels geeigneter Ansteuerung des 3/2-Wegeventils 64 durch die Steuereinrichtung 12 aufzuheben. Dadurch kann überprüft werden, ob die Feststellbremsen 20, 22 auch ohne Bremswirkung der Anhängerbremse 66 ausreichend Bremswirkung für das Kräftfahrzeug mit einem daran gekoppelten Anhänger zur Verfügung stellen können.

Im Folgenden wird zunächst der Löse- und Feststellbetrieb der Feststellbremsen 20, 22 beschrieben. Anschließend wird auf den Notlösebetrieb der Feststellbremsen 20, 22 eingegangen.

Bei dem Löse- und Feststellbetrieb wird das 3/2-Wegeventil 24 durch die Feststellbremse-Notlösesteuereinrichtung 26 derart angesteuert, dass es seine Schaltstellung II einnimmt. Dadurch wird eine Druckmittelzufuhr durch die zweite Druckmittelzuführleitung 32 unterbunden. Die Notbremsleitungen 36 und 40 sind daher über den Anschluss c des 3/2-Wegeventils 24 mit Atmosphäre verbunden. Dabei wird eine Entlüftung der Bremsleitungen 34, 38 durch die jeweiligen Wechselventile 52, 54 unterbunden.

Beim Lösebetrieb der Feststellbremsen 20, 22 ist es erforderlich, die Federspeicherbremszylinder 28 der jeweiligen Feststellbremse 20, 22 zu belüften, um deren Bremswirkung aufzuheben. Damit die von der ersten Druckmittelzuführleitung 30 zur Verfügung gestellte Druckluft die Federspeicherbremszylinder 28 der Feststellbremsen 20, 22 erreichen kann, werden das bistabile 3/2-Wegeventil 14 und das 2/2-Wegeventil 16 in deren Schaltstellung I durch Ansteuerung mittels der Steuereinrichtung 12 geschaltet. Das 2/2-Wegeventil 16 kann jedoch zur Einstellung der Druckmittelströmung in den Ansteuereingang 48 des Relaisventils 18 zwischen den Schaltstellungen I und II abwechselnd hin- und her geschaltet werden. Dadurch verbindet das Relaisventil 18 dessen Anschlüsse a und b entsprechend der Einstellung der Druckmittelströmung in den Ansteuereingang 48 mit ansteigendem Druckmittelströmungsdurchsatz miteinander. Dadurch wird ein stetiges beziehungsweise kontinuierliches oder gestuftes Abklingen der Bremswirkung der Feststellbremsen 20, 22 bewirkt. Das Druckmittel von der Bremsleitung 50 kann somit durch das Relaisventil 18 zu den Bremsleitungen 34 und 38 strömen. Über die Bremsleitungen 34, 38 erreicht das Druckmittel jeweils die Wechselventile 52, 54 und anschließend die Federspeicherbremszylinder 28 der entsprechenden linken und rechten Feststellbremse 20, 22, wodurch die Bremswirkung der Feststellbremsen 20, 22 auf stetige Weise aufgehoben wird.

Im Feststellbetrieb der Feststellbremsen 20, 22 steuert die Steuereinrichtung 12 die Wegeventile 14 und 16 derart an, dass das bistabile 3/2-Wegeventil dessen Schaltstellung II einnimmt und das 2/2-Wegeventil 16 dessen Schaltstellung I einnimmt. Somit strömt die in dem Ansteuereingang 48 befindliche Druckluft zurück durch das 2/2-Wegeventil 16 und anschließend über den Ausgang (Anschluss c) des 3/2-Wegeventils 14 in die Atmosphäre. Dadurch trennt das Relaisventil 18 die Verbindung zwischen dessen Anschlüssen a und b, verbindet jedoch den Anschluss b mit dem mit Atmosphäre verbundenen Relaisventilsausgang 56. Dadurch sind der stromabwärtige Teil der Bremsleitung 50 und somit auch die Bremsleitungen 34 und 38 über den Relaisventilsausgang 56 mit Atmosphäre verbunden und werden entlüftet. Dementsprechend werden die Federspeicherbremszylinder 28 der Feststellbremsen 20, 22 entlüftet, wodurch eine Bremswirkung der Feststellbremsen 20, 22 hergestellt wird.

Der Notlösebetrieb des Feststellbremse-Notlöseeinrichtung 24 ist dann erforderlich, wenn die Feststellbremsen 20, 22 durch die Feststellbremsbetätigungseinrichtung 14, 16, 18 nicht mehr gelöst werden können. Dieser Fall tritt beispielsweise dann auf, wenn eine Leckage in den Bremsleitungen 50, 34 oder 38 auftritt. Durch die Leckage wird ein Druck in der Bremsleitung 50 während des Lösebetriebs der Feststellbremsen 20, 22 nicht in dem Maße aufgebaut, wie dies in der Regel der Fall sein sollte. Die Steuereinrichtung 12 kann durch den Drucksensor 46 beispielsweise anhand eines von dem Drucksensor 46 gelieferten Druckgradienten auf eine Leckage schließen. In diesem Fall kommuniziert die Steuereinrichtung 12 mit der Feststellbremse-Notlösesteuereinrichtung 26, die dann die erforderlichen Maßnahmen, den Notlösebetrieb, ausführt wie nachstehend erläutert wird. Im Hinblick auf einen Totalausfall der Steuereinrichtung 12 ist es sinnvoll, das von dem Drucksensor 46 gelieferte Signal von der Steuereinrichtung 12 und die Feststellbremse-Notlösesteuereinrichtung 26 durchzuschleifen oder letzte direkt mit dem Signal des Drucksensors zu versorgen. Bei Ausfall der Steuereinrichtung 12 kann die Feststellbremsbetätigungseinrichtung 14, 16, 18 nicht mehr betätigt werden, so dass eine Entlüftung der Feststellbremsen 20, 22 allgemein nicht mehr möglich ist. Der Ausfall der Steuereinrichtung 12 kann durch die Kopplung mit der Feststellbremse-Notlösesteuereinrichtung 26 ermittelt werden. In beiden Fällen, d.h. sowohl bei Vorliegen der Leckage als auch bei Ausfall der Steuereinrichtung 12, steuert die Feststellbremse-Notlösesteuereinrichtung 26 das 3/2-Wegeventil 24 derart an, dass es seine Schaltstellung I einnimmt und die Feststellbremsen 20, 22 über die Notbremsleitungen 36, 40 mit der zweiten Druckmittelzuführleitung 32 koppelt sind. Dadurch wird eine Belüftung des jeweiligen Federspeicherbremszylinders 28 bewirkt, wodurch die Feststellbremsen 20, 22 unabhängig von der Funktionstüchtigkeit der Steuereinrichtung 12 und/oder der Feststellbremsbetätigungseinrichtung 14, 16, 18 belüftet werden können.

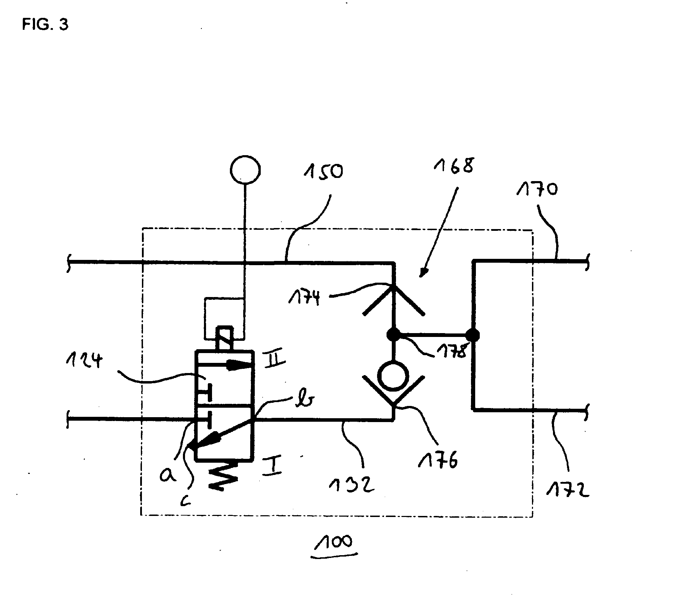

Figur 3 zeigt einen Ausschnitt der erfindungsgemäßen Feststellbremsvorrichtung 100 gemäß einem ersten Ausführungsbeispiel der Erfindung. Zur Vermeidung von Wiederholungen wird bei der Beschreibung dieses Ausführungsbeispiels lediglich auf die Unterschiede zu der vorstehend beschriebenen Feststellbremsvorrichtung eingegangen. Ähnliche oder gleiche Komponenten werden zweckmäßigerweise bei der Beschreibung des ersten Ausführungsbeispiels mit ähnlichen Bezugszeichen bezeichnet. Bei dem ersten Ausführungsbeispiel der Erfindung kann der dargestellte Ausschnitt der Feststellbremsvorrichtung 100 entweder in einem ECPB-Modul zusammen mit den verbleibenden Komponenten integriert sein oder auch an einer günstigen Lage des Nutzfahrzeugs angeordnet, also von dem ECPB-Modul ausgelagert, werden. Insbesondere ist denkbar, das 3/2-Wegeventil 124 samt Wechselventil 168 an geeigneten Stellen des Nutzfahrzeugs auszulagern. Im dargestellten Fall ist die erste Druckmittelzuführleitung 150 mit einem ersten Anschluss 174 des Wechselventils 168 gekoppelt. Weiterhin ist die zweite Druckmittelzuführleitung 132 mit einem zweiten Anschluss 176 des Wechselventils 168 gekoppelt. Der wesentliche Unterschied zu der Vorrichtung gemäß Figur 2 besteht darin, dass das Wechselventil 168 einen Ausgang beziehungsweise Anschluss 178 aufweist, der sowohl mit dem Federspeicherbremszylinder 28 der linken Feststellbremse 20 über eine Bremsleitung 170 als auch mit dem Federspeicherbremszylinder 28 der rechten Feststellbremse 22 über eine Bremsleitung 172 gekoppelt ist. Somit ist Druckmittel, insbesondere Druckluft, entweder aus der ersten oder zweiten Druckmittelzuführleitung 150, 132 den Feststellbremsen 20, 22 über das Wechselventil 168 zuführbar. Ferner ist wie auch bei dem erläuternden Beispiel ein 3/2-Wegeventil 124 in der zweiten Druckmittelzuführleitung 132 vorgesehen, wobei dieses im ersten Ausführungsbeispiel ein federvorgespanntes elektrisches 3/2-Wegeventil 124 ist. Im unbestromten Zustand wird dieses 3/2-Wegeventil 124 in dessen Schaltstellung I durch die Vorspannung der Feder gehalten, wodurch eine Druckmittel- beziehungsweise Druckluftzufuhr von der zweiten Druckmittelzuführleitung 132 gesperrt ist. Hingegen ist das 3/2-Wegeventil 124 im bestromten Zustand in die Schaltstellung II bewegbar. In diesem Fall wird eine Druckmittel- beziehungsweise Druckluftzufuhr über die erste Druckmittelzuführleitung 132 ermöglicht. Im Hinblick auf die Auslagerung des 3/2-Wegeventils 124 kann dieses ebenso von anderen Steuereinrichtungen als die vorstehend genanten angesteuert werden. Auch ist es möglich, dass das 3/2-Wegeventil 124 mit mehreren Steuereinrichtungen gekoppelt ist und die Ansteuerung durch die Steuereinrichtungen einzeln oder kombiniert vorgenommen wird.

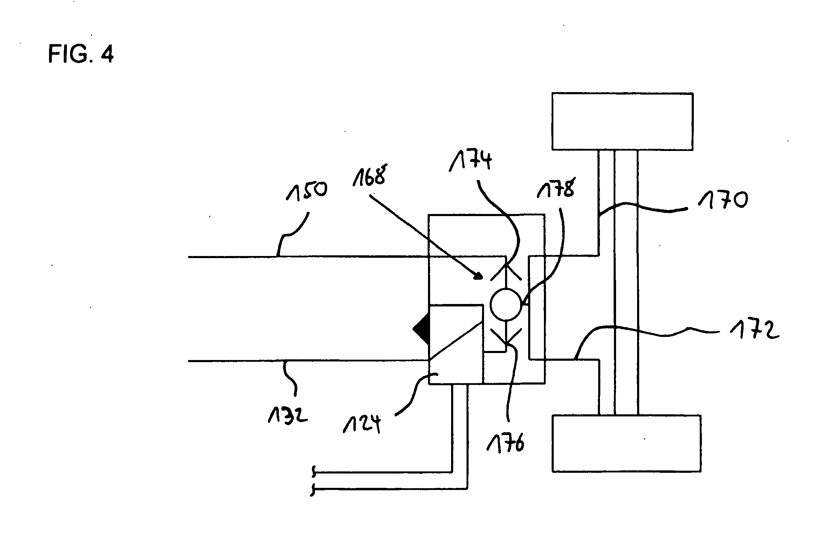

Figur 4 zeigt eine Darstellung der erfindungsgemäßen Feststellbremsvorrichtung 100 gemäß dem ersten Ausführungsbeispiel der Erfindung in einem nur teilweise dargestellten Bremssystem. Wie hieraus ersichtlich ist, ist Druckmittel den Feststellbremsen (nicht gezeigt) über das Wechselventil 168 zuführbar, wobei die Feststellbremsen an einer Achse des Kraftfahrzeugs vorgesehen sind.

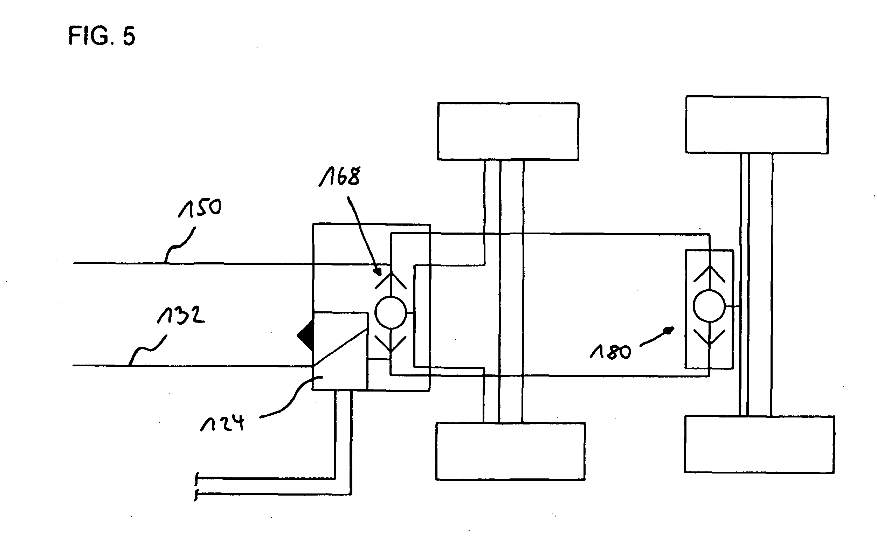

Figur 5 zeigt eine Darstellung der erfindungsgemäßen Feststellbremsvorrichtung 100 gemäß einem zweiten Ausführungsbeispiel der Erfindung. Dieses Ausführungsbeispiel unterscheidet sich von dem ersten Ausführungsbeispiel darin, dass ein weiteres Wechselventil 180 vorgesehen, das auf die gleiche Weise wie das Wechselventil 168 zusätzlich mit der ersten und zweiten Druckmittelzuführleitung 150, 132 gekoppelt ist. Über das weitere Wechselventil 180 ist Druckmittel zwei Feststellbremsen einer weiteren Achse des Kraftfahrzeugs zuführbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

| | |
|---|---|
| 10 | Feststellbremsvorrichtung |
| 12 | Steuereinrichtung |
| 14 | 3/2-Wegeventil |
| 16 | 2/2-Wegeventil |
| 18 | Relaisventil |
| 20 | linke Feststellbremse |
| 22 | rechte Feststellbremse |
| 24 | 3/2-Wegeventil |
| 26 | Feststellbremse-Notlösesteuereinrichtung |
| 28 | Federspeicherbremszylinder |
| 30 | erste Druckmittelzuführleitung |
| 32 | zweite Druckmittelzuführleitung |
| 34 | Bremsleitung für linke Feststellbremse |
| 36 | Notbremsleitung für linke Feststellbremse |
| 38 | Bremsleitung für rechte Feststellbremse |
| 40 | Notbremsleitung für rechte Feststellbremse |
| 42 | Anhängerbremstestleitung |
| 44 | Rückschlagventil |
| 46 | Drucksensor |
| 48 | Ansteuereingang |
| 50 | Bremsleitung |
| 52 | Wechselventil |
| 54 | Wechselventil |
| 56 | Relaisventilausgang |
| 60 | Anhängerbremstestleitung |
| 62 | Anhängerbremstestleitung |
| 64 | 3/2-Wegeventil |
| 66 | Anhängerbremse |
| 124 | 3/2-Wegeventil |
| 132 | zweite Druckmittelzuführleitung |
| 150 | erste Druckmittelzuführleitung |
| 168 | Wechselventil |
| 170 | Bremsleitung für linke Feststellbremse |
| 172 | Bremsleitung für rechte Feststellbremse |
| 174 | erster Anschluss |
| 176 | zweiter Anschluss |
| 178 | dritter Anschluss |
| 180 | Wechselventil |
| a, b, c | Anschlüsse der Wegeventile und des Relaisventils |
| I, II | Schaltstellungen der Wegeventile |

## Patentansprüche

1. Feststellbremsvorrichtung für ein pneumatisches Bremssystem eines Nutzfahrzeugs mit einer ersten Druckmittelzuführleitung (50), über die Druckmittel zumindest einer Feststellbremse (20, 22) über einen ersten Anschluss (174) eines Wechselventils (168) zuführbar ist, und einer zweiten Druckmittelzuführleitung (32), über die Druckmittel der zumindest einen Feststellbremse (20, 22) über einen zweiten Anschluss (176) des Wechselventils (168) zuführbar ist, **dadurch gekennzeichnet, dass** über das Wechselventil (168) zumindest zwei Feststellbremsen (20, 22) Druckmittel zuführbar ist, die an einer Achse des Nutzfahrzeugs vorgesehen sind, wobei die erste und zweite Druckmittelzuführleitung (50, 32) jeweils mit einem ersten und zweiten Anschluss eines weiteren Wechselventils (180) gekoppelt sind, über das zumindest zwei Feststellbremsen einer weiteren Achse Druckmittel zuführbar ist.

2. Feststellbremsvorrichtung nach Anspruch 1, **dadurch gekennzeichnet, dass** das Wechselventil (168) und/oder das weitere Wechselventil (180) sowie ein eine Notlösefunktion zur Verfügung stellendes 3/2-Wegeventil (124) zu einer Baugruppe zusammengefasst sind.

3. Feststellbremsvorrichtung nach einem der vorangehenden Ansprüche, **dadurch gekennzeichnet, dass** das Wechselventil (168) und/oder das weitere Wechselventil (180) in einem ECPB-Modul aufgenommen werden.

## Claims

1. Parking brake device for a pneumatic braking system of a utility vehicle, comprising a first compressed medium supply line (50), via which compressed medium can be supplied to at least one parking brake (20, 22) via a first connection (174) of a shuttle valve (168), and comprising a second compressed medium supply line (32), via which compressed medium can be supplied to the at least one parking brake (20, 22) via a second connection (176) of the shuttle valve (168),
**characterised in that**
compressed medium can be supplied via the shuttle valve (168) to at least two parking brakes (20, 22) which are disposed on an axle of the utility vehicle, wherein the first and second compressed medium supply line (50, 32) are respectively coupled to a first and a second connection of a further shuttle valve (180), via which compressed medium can be supplied to at least two parking brakes of a further axle.

2. Parking brake device according to claim 1, **characterised in that** the shuttle valve (168) and / or the further shuttle valve (180) as well as a 3/2 way valve (124) providing an emergency release function are put together to form a component group.

3. Parking brake device according to one of the preceding claims, **characterised in that** the shuttle valve (168) and / or the further shuttle valve (180) are received in an ECPB module.

## Revendications

1. Dispositif de frein de stationnement pour un système de freinage pneumatique d'un véhicule utilitaire, comprenant un premier conduit (5) d'amenée d'air comprimé, par lequel du fluide comprimé peut être amené à au moins un frein (20, 22) de stationnement par un premier raccord (174) d'une soupape (168) à deux voies, et un deuxième conduit (32), d'amenée de fluide comprimé, par lequel du fluide comprimé peut être amené au moins un frein (20, 22) de stationnement par un deuxième raccord (176) de la soupape (168) à deux voies,
**caractérisé en ce que**
par la soupape (168) à deux voies, du fluide comprimé peut être amené à au moins deux freins (20, 22) de stationnement qui sont prévus sur un essieu du véhicule utilitaire, le premier et le deuxième conduits (50, 32) d'amenée du fluide comprimé étant couplés respectivement à un premier et à un deuxième raccord d'une autre soupape (180) à deux voies, par laquelle du fluide comprimé peut être amené à deux freins de stationnement d'un autre essieu.

2. Dispositif de frein de stationnement suivant la revendication 1, **caractérisé en ce que** la soupape (168) à deux voies et/ou l'autre soupape (180) à deux voies ainsi qu'une soupape (124) à 3/2 de voies mettant à disposition une fonction de desserrage d'urgence sont rassemblées en un groupe de construction.

3. Dispositif de frein de stationnement suivant l'une des revendications précédentes, **caractérisé en ce que** la soupape (168) à deux voies et/ou l'autre soupape (180) à deux voies est logée dans un module ECPB.
